# EUROPEAN PATENT APPLICATION

(11) **EP 2 428 915 A2**
(43) Date of publication of application: **14.03.2012**
(21) Application number: 11177419.6
(22) Date of filing: 12.08.2011
(51) Int. Cl.: G06K 9/22, G06K 9/00

(54) **Method and apparatus for providing augmented reality (AR)**

(30) Priority: 09.09.2010 KR 20100088597
(71) Applicant: Pantech Co., Ltd, Mapo-gu, Seoul 121-270 (KR)
(72) Inventor: Oh, Seung-Jin, 121-270 Seoul (KR); Cho, Sung-Hyoun, 121-270 Seoul (KR)
(74) Representative: Herzog, Markus

(57) **Abstract**

There is provided a method of providing Augmented Reality (AR) using the relationship between objects in a server that is accessible to at least one terminal through a wired/wireless communication network, including: recognizing a first object-of-interest from first object information received from the terminal; detecting identification information and AR information about related objects associated with the first object-of-interest, and storing the identification information and AR information about the related objects; recognizing, when receiving second object information from the terminal, a second object-of-interest using the identification information about the related objects; and detecting AR information corresponding to the second object-of-interest from the AR information about the related objects, and transmitting the detected AR information to the terminal.

## Description

### CROSS-REFERENCE TO RELATED APPLICATION

This application claims priority to and the benefit under 35 U.S.C. §119(a) of Korean Patent Application No. 10-2010-0088597, filed on September 9, 2010, the entire disclosure of which is incorporated herein by reference for all purposes as if fully set forth herein.

### BACKGROUND

FIELD

The following description relates to an apparatus and method for providing Augmented Reality (AR), and more particularly, to an apparatus and method for providing Augmented Reality (AR) using a relationship between objects.

DISCUSSION OF THE BACKGROUND

Augmented Reality (AR) is a computer graphic technique of synthesizing a virtual object or virtual information with a real environment such that the virtual object or virtual information looks like a real object or real information that exists in the real environment.

Unlike existing Virtual Reality (VR) that targets only virtual spaces and virtual objects, AR is characterized by synthesizing virtual objects based on a real world to provide additional information that cannot easily obtain from the real world. Due to the characteristic of AR, AR can be applied to various real environments, for example, as a next-generation display technique suitable for a ubiquitous environment.

In order to quickly provide AR services to users, quick, correct recognition of objects and quick detection of related functions and services are important. As AR services become more common, it is expected that marker-based and markerless-based services will be provided together, and also various AR service applications and AR services provided from many service providers will coexist. Thus, the number of objects that can be provided by AR services are increasing. Accordingly, a high capacity database is needed to store AR services.

Accordingly, data search from such a high capacity database is needed, which increases time consumption for object recognition and service detection.

### SUMMARY

Exemplary embodiments of the present invention provide an Augmented Reality (AR) providing apparatus and method allowing quick object recognition.

Exemplary embodiments of the present invention also provide an Augmented Reality (AR) providing apparatus and method capable of improving an object recognition rate.

Exemplary embodiments of present invention also provide an Augmented Reality (AR) providing apparatus and method capable of quickly detecting and providing AR information related to objects.

Additional features of the invention will be set forth in the description which follows, and in part will be apparent from the description, or may be learned by practice of the invention

An exemplary embodiment of the present invention discloses a method for providing Augmented Reality (AR), the method including: recognizing a first object-of-interest from first object information received from a terminal; detecting identification information and AR information about related objects associated with the first object-of-interest; storing the identification information and AR information about the related objects; recognizing, if second object information is received from the terminal, a second object-of-interest from the second object information using the stored identification information about the related objects; and detecting AR information corresponding to the second object-of-interest from the AR information about the related objects; and transmitting the detected AR information to the terminal.

An exemplary embodiment of the present invention discloses a server to provide Augmented Reality (AR), the server including: a communication unit to process signals received from and to be transmitted to a terminal; a full information storage to store identification information and AR information about an object; a related object information storage to store identification information and AR information about related objects associated with the object; and a controller to recognize a first object-of-interest from a first object information received from the terminal, to identify identification information and AR information about related objects associated with the first object-of-interest, to store the identification information and AR information about the related objects in the related object information storage, to recognize, if a second object information is received from the terminal, a second object-of-interest from the second object information using the stored identification information about the related objects, to detect an AR information corresponding to the second object-of-interest, and to transmit the AR information to the terminal.

An exemplary embodiment of the present invention discloses a method for providing Augmented Reality (AR), the method including: acquiring first object information and transmitting the first object information to a server; receiving identification information and AR information about related objects associated with the first object information from the server; storing the identification information and AR information about the related objects; recognizing, if second object information is received, an object-of-interest from the second object information using the identification information about the related objects; detecting AR information corresponding to the object-of-interest recognized from the second object information; and outputting the detected AR information.

An exemplary embodiment of the present invention discloses a terminal to provide Augmented Reality (AR), the terminal including: a communication unit to process signals received from and to be transmitted to a server through a wired/wireless communication network; an object information acquiring unit to acquire information about an object included in an image of a real environment; an output unit to output information obtained by synthesizing the information about the object with AR information about the object; a storage to store AR information corresponding to an object received from the server, and to store identification information and AR information about related objects associated with the object; and a controller to transmit first object information received from the object information acquiring unit to the server, to receive identification information and AR information about related objects associated with the first object information from the server, to store the identification information and AR information about the related objects in the storage, to recognize, if second object information is received from the object information acquiring unit, an object-of-interest from the second object information using the identification information about the related objects stored in the storage, to detect AR information corresponding to the object-of-interest, and to output the AR information through the output unit.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 illustrates a configuration of a system to provide Augmented Reality (AR) using a relationship between objects according to an exemplary embodiment.

FIG. 2 is a diagram illustrating a terminal to provide AR using a relationship between objects according to an exemplary embodiment.

FIG. 3 illustrates a Social Network Service (SNS) for an object according to an exemplary embodiment.

FIG. 4 illustrates a SNS filtered based on context information according to an exemplary embodiment.

FIG. 5 is a diagram illustrating a server to provide AR using a relationship between objects according to an exemplary embodiment.

FIG. 6 illustrates an object information structure according to an exemplary embodiment.

FIG. 7 is an illustrative depiction of a neighbor list according to an exemplary embodiment.

FIG. 8 depicts an illustrative parent object and child object according to an exemplary embodiment.

FIG. 9 is a flowchart illustrating a method for providing AR according to an exemplary embodiment.

FIG. 10 is a flowchart illustrating a method for providing AR according to an exemplary embodiment.

FIG. 11 depicts an illustrative AR provided using a relationship between objects according to an exemplary embodiment.

FIG. 12 depicts an illustrative AR provided using a relationship between objects according to an exemplary embodiment.

### DETAILED DESCRIPTION OF THE ILLUSTRATED EMBODIMENTS

Exemplary embodiments are described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements

Augmented Reality (AR) technologies developed so far require a relatively long time to recognize objects. To identify color markers or markerless objects requires relatively complicated procedures to find characteristics and recognize objects corresponding to the characteristics. If various objects are provided from many service providers that use different object recognition methods then an object recognition rate may deteriorate. An apparatus and method for detecting related-object information, including identification information and AR information about objects related to a recognized object, and storing the related-object information in advance is provided. In addition, information that is anticipated to be requested by a user based on the relationship between objects is provided. For example, when AR information about a certain object is provided, information about related objects associated with the object, such as parent and child objects of the object, and access paths to the related objects may be provided together.

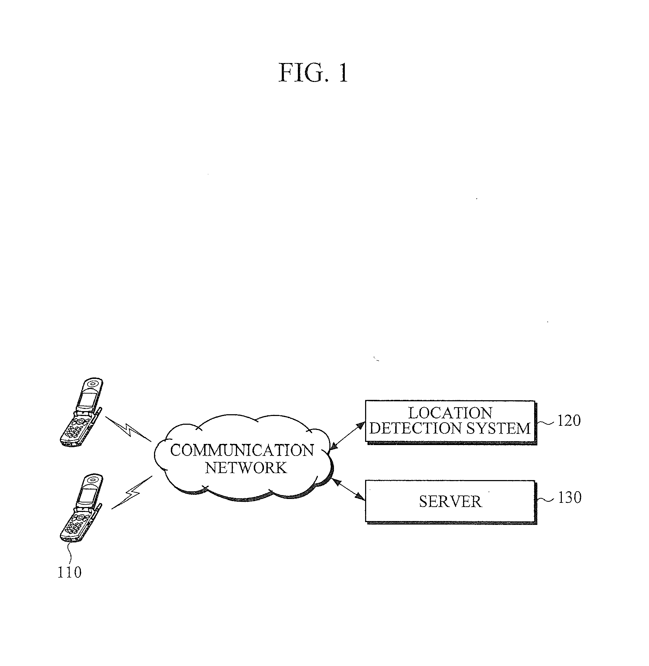

FIG. 1 illustrates a configuration of a system to provide Augmented Reality (AR) using a relationship between objects according to an exemplary embodiment.

The system includes at least one terminal 110, a location detection system 120, a server 130, and a communication network. The at least one terminal 110 provides for AR information and is connected to the server 130 which provides AR services through a wired/wireless communication network. The terminal 110 may receive its own location information from the location detection system 120 through the wired/wireless communication network. The server 130 may acquire the location information of the terminal 110 from the terminal 100 or from the location detection system 120.

The terminal 110 may be a mobile communication terminal, such as a Personal Digital Assistants (PDA), a smart phone, a navigation terminal, etc. or a personal computer, such as a desktop computer, a tablet, a notebook, etc. The terminal 110 may be a device that can recognize objects included in real images and display AR information corresponding to the recognized objects.

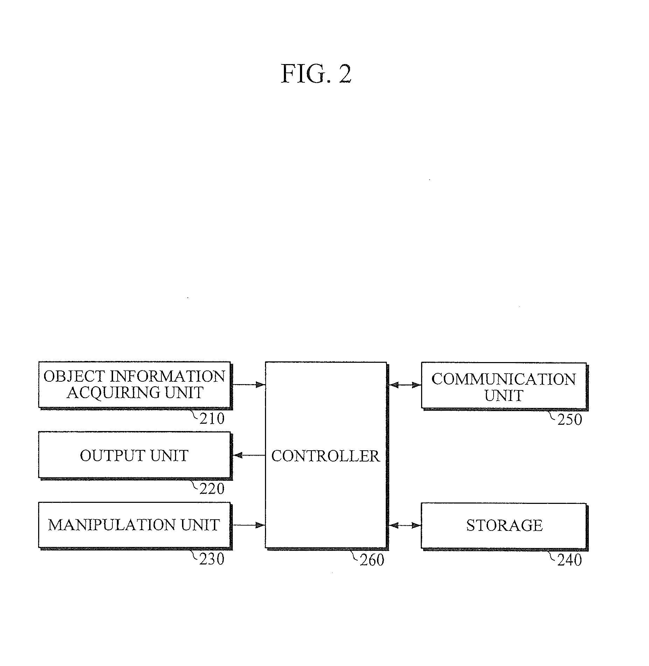

FIG. 2 is a diagram illustrating a terminal to provide AR using a relationship between objects according to an exemplary embodiment.

The AR providing terminal may include an object information acquiring unit 210, an output unit 220, a manipulation unit 230, a communication unit 250, a storage 240, and a controller 260.

The object information acquiring unit 210 acquires object information about an object-of-interest from among objects included in an image of a real environment (i.e., real image), and transfers the information to the controller 260. The term "object" used in the specification may be a marker included in a real image, a markerless-based object or state, or an arbitrary thing, which can be defined in a real world, such as at least one of a video image, sound data, location data, directional data, velocity data, etc. The object information acquiring unit 210 may be a camera that captures and outputs images of objects, an image sensor, a microphone that acquires and outputs sound, an olfactory sensor, a GPS sensor, a geo-magnetic sensor, a velocity sensor, etc.

The output unit 220 may output information obtained by synchronizing the object information acquired by the object information acquiring unit 210 with AR information corresponding to the object information. The AR information may be data about the recognized object. By way of example, if the recognized object is the Louvre Museum, then architectural information about the Louvre Museum, videos introducing the collections at the Louvre Museum, a tour guide announcement, etc. may be the AR information associated with the Louvre Museum. In an exemplary embodiment, the AR information may include a Social Network Service (SNS) related to the object. The output unit 220 may be a display that displays visual data, a speaker that outputs sound data in the form of audible sound, etc. Further, the output unit 220 and the manipulation unit 230 may be combined as a touchscreen display.

The manipulation unit 230 is an interface that receives user information, and may be a key input panel, a touch sensor, a microphone, etc.

The storage 240 stores AR information corresponding to objects received from the server 130 (see FIG. 1), and context information for personalizing the AR information. The context information may include, for example, user information (including the user's name, age, gender, etc.), words often used in messages received from or to be transmitted to the user, applications and search words often used by the user, ranks of accessed sites, a current time and location, the user's emotional state, etc. The controller 260 filters AR information received from the server 130 (see FIG. 1) using the context information, and outputs the result of the filtering through the output unit 220.

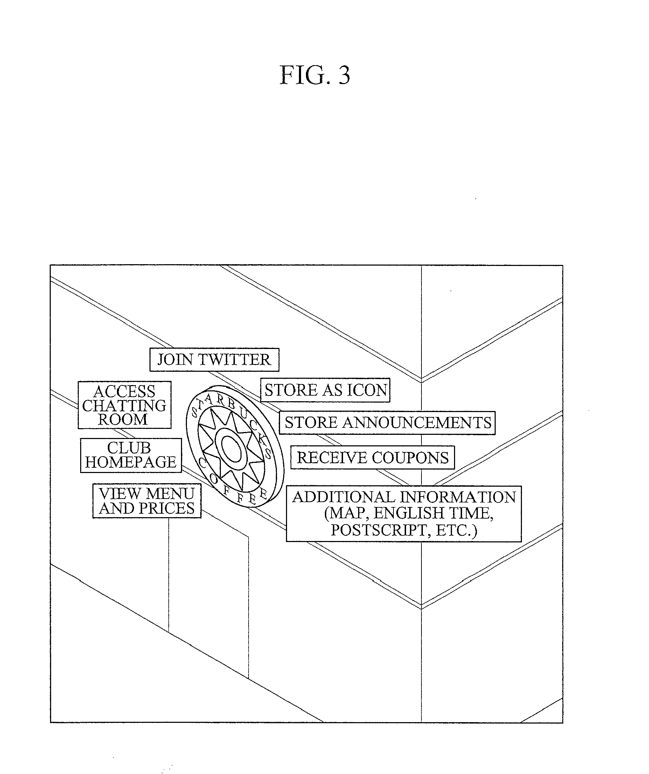

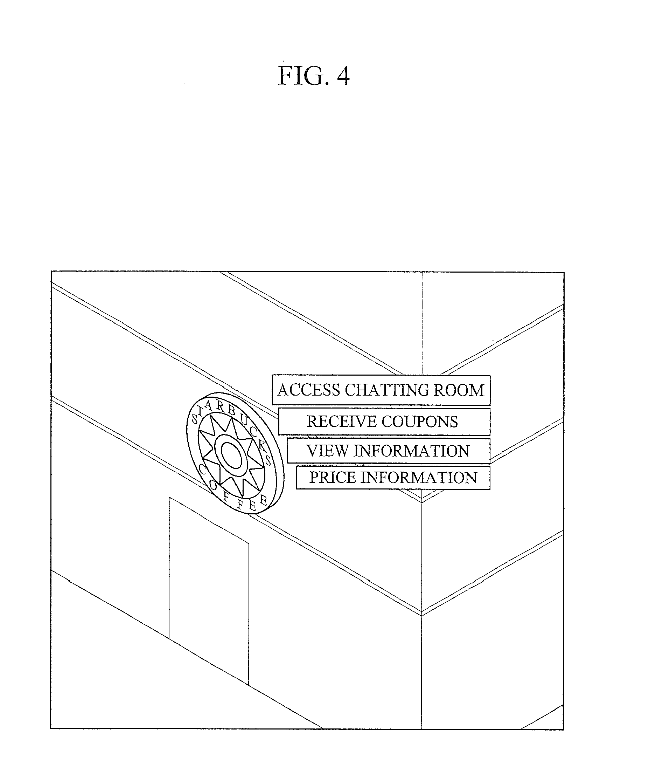

An example in which the controller 260 filters AR information using context information will be described with reference to FIG. 3 and FIG. 4.

FIG. 3 illustrates a Social Network Service (SNS) for an object according to an exemplary embodiment. FIG. 4 illustrates a SNS filtered based on context information according to an exemplary embodiment.

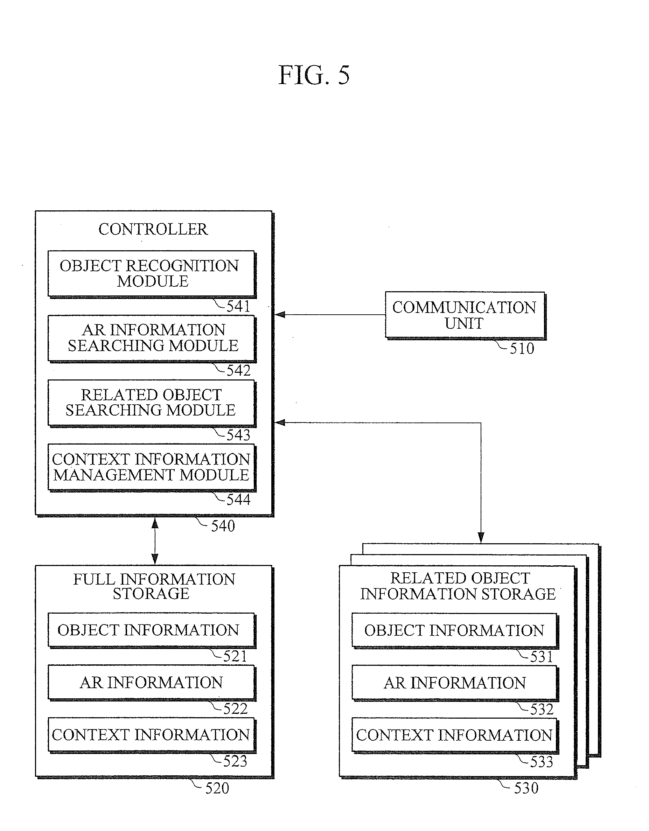

Referring to FIG. 3, AR information related to a "Starbucks®" logo, the object, is displayed, and multiple pieces of SNS information, such as "view menu and prices," "additional information," "join Twitter®," "access chat room," "club homepage," etc., are displayed together with the "Starbucks®" logo. The controller 260 may filter the AR information to match the user's age, taste, etc. from among the various AR information illustrated in FIG. 3, based on the stored context information. The filtered AR information may be outputted as illustrated in FIG. 4. As shown in FIG. 4, the AR information is filtered to display "access chat room," "receive coupons," "view information," and "price information" associated with the "Starbucks®" logo. In an exemplary embodiment, the controller 260 may differentiate the filtered AR information based on the context information. By way of example, if a AR providing terminal receives a signal to select "access chat room" from a user through the manipulation unit 230, then the controller 260 may request that the server 130 allow the user to enter a chat room whose members are the same age as the user, based on age information included in the context information. For example, if the AR information is a SNS service, an AR information searching module 542 (see FIG. 5) analyzes the category of the SNS service, such as chat, Twitter®, club homepage, price information, postscript, etc., which can be provided by the SNS service, and then, compares the characteristic of the analyzed category to the context information. For example, if menu price information and postscript information exist in the current category and "shopping" is ranked highest in a preference ranking of the corresponding terminal stored in the context information, the price information and a postscript information SNS service are displayed as top-ranked services on the user interface of the terminal.

Referring again to FIG. 2, in an exemplary embodiment, the storage 240 may include information about related objects. The information about "related objects" may be information about other objects associated with a recognized object, which will be described with reference to FIG. 5. Accordingly, since the information about related objects is stored in the storage 240, the controller 260 may recognize, if information about a specific object is received from the object information acquiring unit 210, the specific object using the information about related objects associated with the recognized object and quickly provide AR information corresponding to the specific object, without transmitting the information about the specific object to the server 130. If receiving AR information about a specific object and information about related objects associated with the specific object from the server 130, the controller 260 provides information that is anticipated to be useful to a user, based on the relationship between the specific object and related objects, while outputting the AR information about the specific object. By way of example, the controller 260 may provide information about the related objects associated with the specific object, such as the parent and child objects of the specific object and access paths to the related objects, while outputting AR information corresponding to the specific object.

The communication unit 250 processes signals received through a wired/wireless communication network and outputs the results of the processing to the controller 260. The communication unit 250 also processes signals from the controller 260 and transmits the results of the processing through the wired/wireless communication network. In an exemplary embodiment, the communication unit 250 transmits object information output from the controller 260 to the server 130 (see FIG. 1), and outputs AR information received from the server 130 to the controller 260.

The controller 260 controls the components described above and provides AR information using the relationship between objects. In an exemplary embodiment, the controller 260 may be a hardware processor or a software module that is executed in a hardware processor. The operation of the controller 260 may be described in more detail in a method for providing AR using the relationship between objects, which will be described below.

FIG. 5 is a diagram illustrating a server to provide AR using a relationship between objects according to an exemplary embodiment.

The AR providing server may include a communication unit 510, a full information storage 520, a related object information storage 530, and a controller 540.

A communication unit 510 processes signals received through a wired/wireless communication network and outputs the results of the processing to a controller 540. The communication unit 510 also processes signals from the controller 540 and transmits the results of the processing through the wired/wireless communication network. In an exemplary embodiment, the communication unit 510 may process signals received from or to be transmitted to at least one terminal 110 (see FIG. 1). In an exemplary embodiment the communication unit 150 receives content, SNS service information, etc., which are to be provided as AR information about objects, from an external information provider through the wired/wireless communication network.

The AR providing server includes a storage, which may include a full information storage 520 and a related object information storage 530. The full information storage 520 stores object information 521, AR information 522 corresponding to objects, and context information 523, which is used to personalize the AR information 522 to each individual terminal.

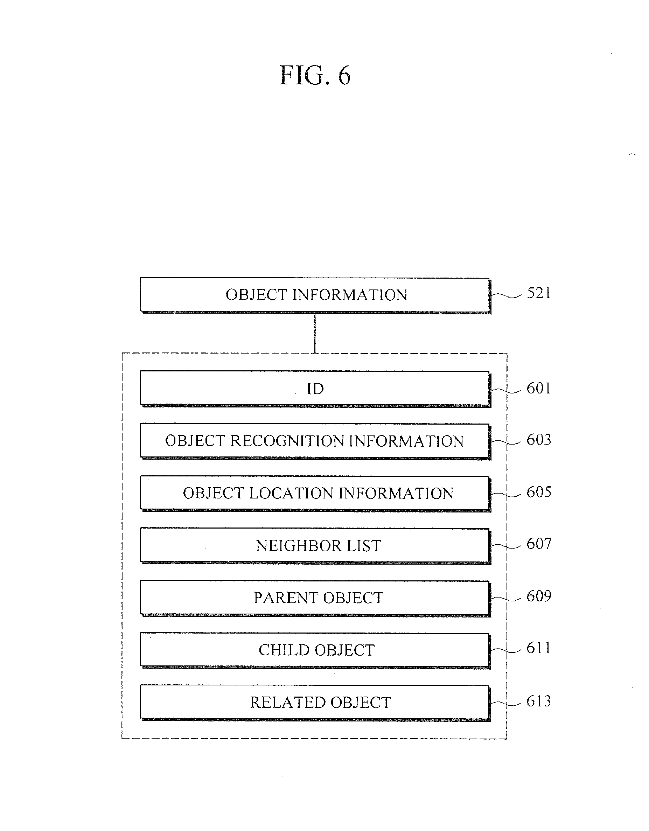

The object information 521 includes identification information and related information about objects. An example of the structure of an object information 521 is shown in FIG. 6.

FIG. 6 illustrates an object information structure according to an exemplary embodiment.

Referring to FIG. 6, ID 601 is an identifier assigned to identify an object, and object recognition information 603 is characteristic information for recognizing the object corresponding to the ID 601. For example, the object recognition information 603 may include an attribute value of the object, such as the outline, color, etc. of the object. The controller 540 compares a characteristic extracted from object information received from the terminal 110 to the attribute value of the object recognition information 603 to determine what the object is. Object location information 605 is information regarding a location at which the object is positioned. Object location information 605 is used to provide different kinds of information with respect to the same object based on its locations. Neighbor list 607 is a list of objects that are positioned within a specific distance from the object. Parent object 609 is information about a parent object to which the object belongs. Child object 611 is information about child objects, which the object may include. Related object 613 stores information about other objects associated with the object based on a logical relationship.

Referring back to FIG. 5, the AR information 522 stores various data about recognized objects. AR information 522 corresponding to a certain object may be assigned the same ID as the object. The context information 523 is used to personalize the AR information 522, and for example, includes user information including the name, age, gender, etc. of the user, words often used in text messages, applications and search words often used by the user, rankings of accessed sites, a current time and location, the user's emotional state, etc.

The related object information storage 530 stores information about at least one object related to a recognized object, and may store object information 531, AR information 532 of the related object, and context information 533. The related object information storage 530 may include, as illustrated in FIG. 5, multiple related object information storages that may correspond to individual terminals. In an exemplary embodiment, each related object information storage 530 may be assigned the same ID as the corresponding terminal. The related objects may include objects included in a neighbor list, e.g., a list of objects that are positioned within a specific distance from a recognized object, and parent and child objects of the recognized object.

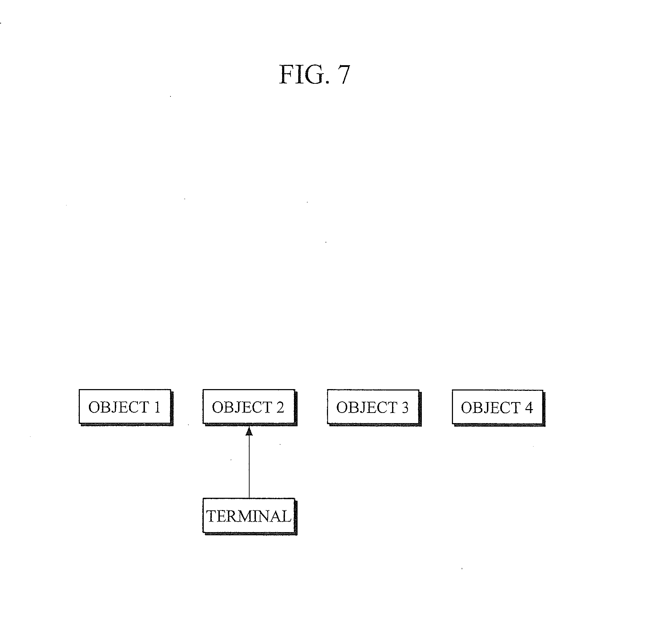

FIG. 7 is an illustrative depiction of a neighbor list according to an exemplary embodiment.

Referring to FIG. 5 and FIG. 7, objects 1, 3, and 4 may be included in the neighbor list of object 2. If object 2 is recognized, the controller 540 searches for identification information and AR information about the objects 1, 3, and 4 from the full information storage 520, and stores the found information in the related object information storage 530. If any one of the objects 1, 3 and 4, which are related objects associated with the object 2, is recognized, the controller 540 searches for object recognition information about the recognized object in object information 531 of the corresponding object stored in the related object information storage 530, instead of searching for the corresponding object from the full information storage 520. The controller 540 compares the found object recognition information to the corresponding object. Therefore, the number of objects that are to be compared by the controller 540 for object recognition is reduced, which may contribute to improvement of a recognition rate. For example, this method is particularly efficient in recognizing markers having distorted shapes, e.g., a 3D marker that has complex shapes, which depends on a view angle, etc.

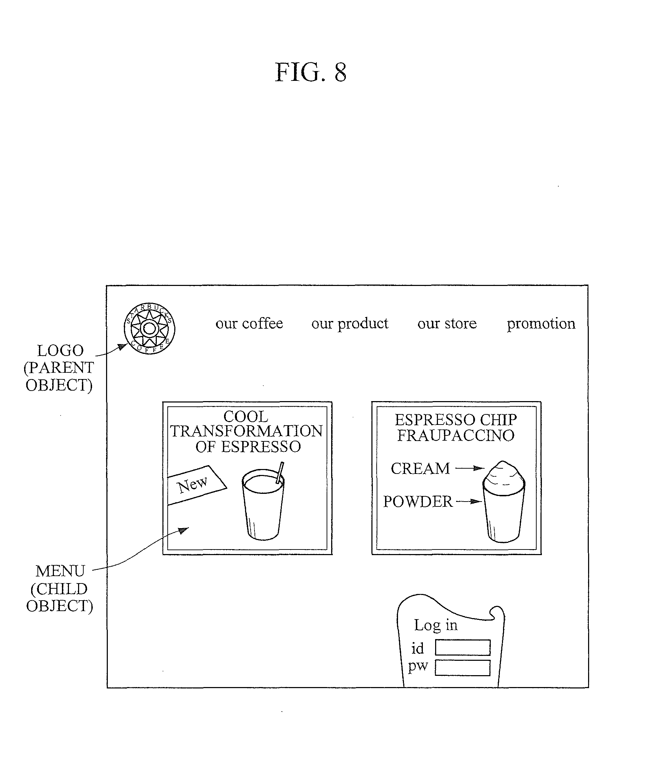

FIG. 8 depicts an illustrative parent object and child object according to an exemplary embodiment.

Referring to FIG. 8, a "Starbucks®" logo corresponds to a parent object, and a menu corresponds to a child object. Accordingly, referring to FIG. 5 and FIG. 8, if the "Starbucks®" logo corresponding to a parent object is recognized, the controller 540 acquires identification information and AR information about a menu corresponding to a child object of the "Starbucks®" logo, from the full information storage 520. Thereafter, if the menu is recognized again, the controller 540 searches for information about the menu from the related object information storage 530, instead of searching for information about the menu from the full information storage 520, thereby quickly acquiring the menu information, which contributes to improvement of a recognition rate.

Referring back to FIG. 5, the controller 540, which controls the individual components described above and performs the method for providing AR using the relationship between objects, may be a processor or a software module that is executed in the processor. The controller 540 may include an object recognition module 541, an AR information searching module 542, a related object searching module 543, and a context information management module 544.

The object recognition module 541 detects an object-of-interest from object information received from the terminal 110 (see FIG. 1) through the communication unit 510. In other words, the object recognition module 541 compares a characteristic extracted from object information received from the terminal 110 to object recognition information included in object information 521 and 531, to detect an ID of the object included in the received object information. In an exemplary embodiment, the controller determines that the object information received from the terminal 110 is information that has been previously received, if the object recognition module 541 recognizes the object using object information 531 included in the related object information storage 530 corresponding to the terminal 110. In an exemplary embodiment, if receiving information includes multiple objects from the terminal 110, the object recognition module 541 may preferentially search for objects that can be easily recognized first. For example, as illustrated in FIG. 8, if a "Starbucks®" logo, corresponding to a parent object, is compared to a "menu," corresponding to its child object, it may take a greater time to recognize the "menu" object because it may have a relatively more complicated shape. Accordingly, the object recognition module 541 preferentially recognizes the "Starbucks®" logo, corresponding to a parent object, and then acquires identification information about child objects related to the "Starbucks®" logo. Since information about the menu is acquired in advance as child object information of the "Starbucks®" logo, a recognition rate with respect to the menu may be improved. In an exemplary embodiment, the object recognition module 541 may perform sequential object recognition, e.g., the object recognition module 541 may output different result values with respect to the same "Starbucks®" logo based on the locations at which the "Starbucks®" logo is attached or found. In other words, the object recognition module 541 primarily identifies the "Starbucks®" logo and secondarily recognizes a location at which the "Starbucks®" logo is attached or located. For example, if the menu of a "Starbucks®" store located in Daehakro is different from the menu of a "Starbucks®" store located in Kangnam, and in this case, the object recognition module 541 may output different identifiers based on the locations of "Starbucks®" stores.

The AR information searching module 542 searches for AR information 522 and 532 corresponding to the object recognized by the object recognition module 541. In other words, the AR information searching module 542 searches for AR information which has the same identifier as the recognized object. In an exemplary embodiment, in which a recognized object, corresponding to a certain terminal, is an object that has been previously recognized, the AR information searching module 542 searches for AR information yields AR information 532 from a related object information storage 530 corresponding to the terminal.

The related object searching module 543 searches for identification information and AR information about related objects associated with an object corresponding to an object identifier identified by the object identification module 541, from the full information storage 520, and stores the found identification information and AR information about related objects in the related object information storage 530. The related objects may be included in a neighbor list of an object information structure illustrated in FIG. 6, and may also become parent objects and child objects of the object information structure. The related object searching module 543 may search for and store information about related objects having a primary relationship with the object, or may search for and store information about related objects having s secondary or more relationship with the object. For example, the related object searching module 543 may search for and store objects belonging to a neighbor list of the corresponding object, or search for and store a parent or child object from among objects belonging to the neighbor list of the corresponding object. In addition, the related object searching module 543 may transmit the found related objects to the corresponding terminal, with or without storing them in the related object information storage 530.

The context information management module 544 manages personalized information about each terminal's user. The context information management module 544 may create, as context information, each terminal user's preference estimated based on communication use history, user information, and symbol information registered by the user. The context information may include gender, age, search words often used, accessed sites, emotional states, time information, etc., of a user.

The AR information searching module 542 and the related object searching module 543 may search for personalized information corresponding to each terminal using the context information 523 that is managed by the context information management module 544. In other words, if multiple pieces of AR information are found based on an identifier assigned to a certain object, AR information filtered using the context information among the found AR information may be transmitted to the corresponding terminal.

In an exemplary embodiment, the context information management module 544 assigns scores to the context information to manage the context information. By way of example, if a user A searches for "coffee" between 2 pm and 3 pm, the context information management module 544 may assign "+1 to 2 PM," "+1 to 3 PM," and "+1" to "coffee." Thereafter, if the user A accesses the terminal at 2 pm, an internet or website, for example, a Naver window, and coffee-related information may be preferentially provided to the user A. Although depicted as performed in a server, aspects of the present invention need not be limited thereto and part or all of the configuration of FIG. 5 may be provided by a terminal.

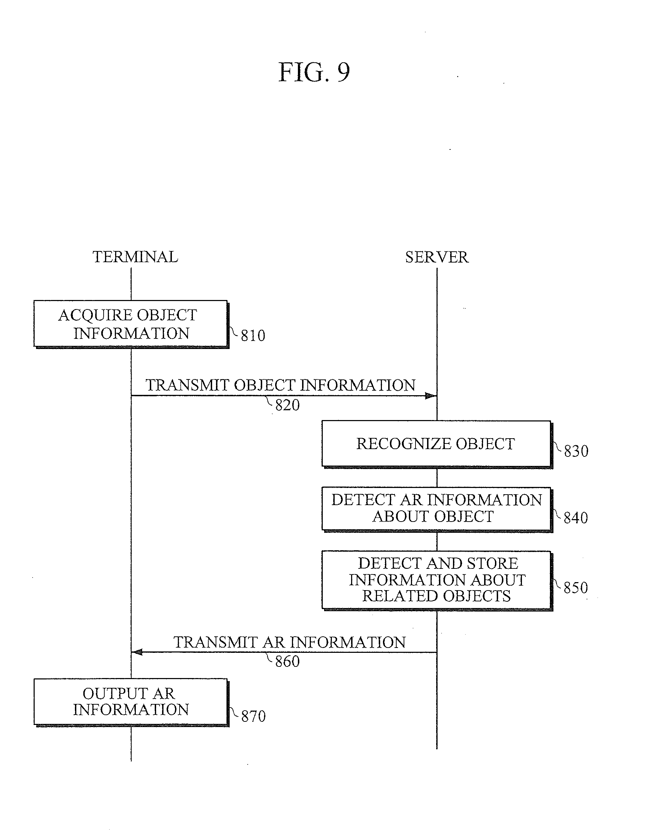

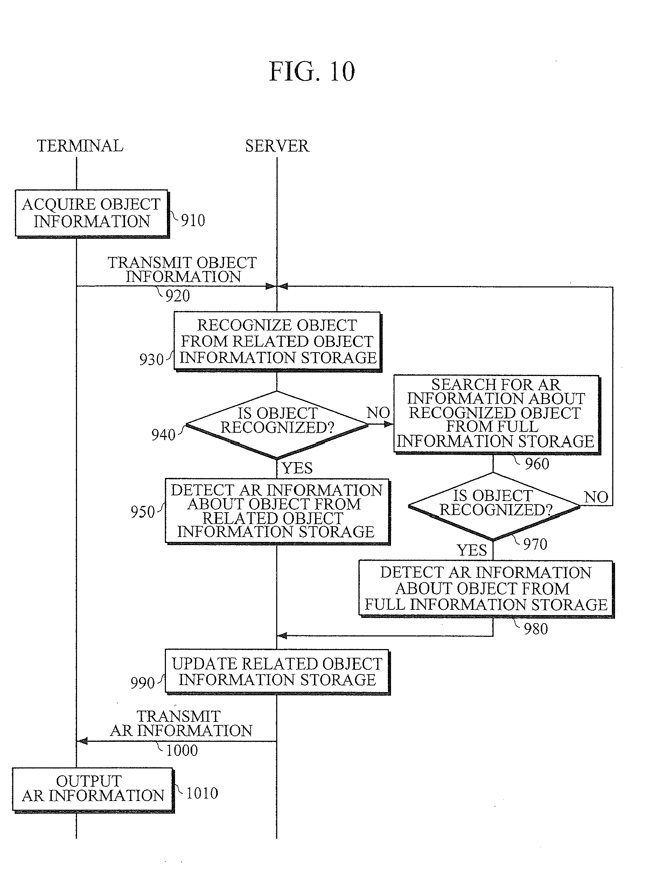

Hereinafter, a method for providing AR using a relationship between objects, which is performed by the system to provide AR described above, will be described with reference to FIG. 9 and FIG. 10. For convenience of description, the controller 260 of the terminal illustrated in FIG. 2 is referred to as a terminal, and the controller 540 of the server illustrated in FIG. 5 is referred to as a server.

FIG. 9 is a flowchart illustrating a method for providing AR according to an exemplary embodiment. FIG. 10 is a flowchart illustrating a method for providing AR according to an exemplary embodiment. Although depicted as being performed serially, those skilled in the art will appreciate that at least a portion of the operations of the methods of FIG. 9 and FIG. 10 may be performed contemporaneously, or in a different order than presented in FIG. 9 and FIG. 10, respectively. The examples illustrated in FIG. 9 and FIG. 10 will be described with reference to FIG. 5.

FIG. 9 corresponds to the case where a terminal recognizes a first object, and FIG. 10 corresponds to the case in which a terminal recognizes a second object using information related to a first object that has been previously recognized.

Referring to FIG. 9, in operation 810, the terminal acquires object information. For example, the object information may be one or more of: a photograph image captured by a camera, sound data, and location data. For example, the terminal may acquire location information of a first object while capturing an image of the first object. In operation 820, the terminal transmits the object information to a server and requests the server send AR information corresponding to the first object. In operation 830, the server recognizes an object-of-interest from the received object information. In other words, if the object information is a captured image, the server extracts a characteristic of an object-of-interest, such as the outline of the object-of-interest from the photographed image, compares the characteristic of the object-of-interest to identification information stored in the full information storage 520 (see FIG. 5), and determines whether there is identification information matching the characteristic of the object-of-interest, thereby detecting an ID of the object-of-interest.

In an exemplary embodiment, if there are multiple objects, the server may preferentially recognize objects that can be relatively easily recognized, in order to improve an object recognition rate. In an exemplary embodiment, the server may initially recognize the object that is most easily recognized. For example, the server uses a method for first recognizing markers, such as barcodes or figures, as objects-of-interest since they can be relatively easily recognized and may then recognize complex objects. For example, complex objects may include objects which include a combination of pictures, letters and figures. By way of example, the complex objects may be recognized by analyzing a first characteristic of a complex object having a largest size to detect a primary category and then analyzing a second characteristic of a complex object having a next largest size to detect a secondary category, which may be a child category of the primary category.

In an exemplary embodiment, the server may detect an object identifier using multiple objects, instead of recognizing an object using a single characteristic. For example, if multiple objects or markers, which have the same shape as an object, are positioned at several different locations, image information obtained by capturing an image of the objects or markers and location information of the objects or markers may be acquired as object information. The server may detect object identifiers distinguished according to the locations of the objects, as well as object identifiers corresponding to the captured images of the objects. For example, if a captured image of an object is a specific car manufacture's logo, the same logo may be attached or found in multiple locations. A first location may be a place where the traffic of older persons is heavy and a second location may be a place where younger persons gather. The server receives location information of the places and the logo from a user to detect an identifier corresponding to the logo and identifiers distinguished according to age. Accordingly, AR information corresponding to the place where the traffic of older persons is heavy may be information about midsized cars and AR information corresponding to the place where younger persons gather may be information about sport cars.

In operation 840, the server detects AR information corresponding to the recognized object identifiers, detects information about related objects associated with the object identifiers from the full information storage 520, and then stores the detected information about related objects in the related object information storage 530. For example, the server detects object information included in a neighbor list of a recognized object or information about the parent and child objects of the recognized object, and stores the detected information. In operation 850, the server classifies the related object information according to individual terminals and then stores it. In operation 850, the server may detect and store information about related objects in separate operations, or sequentially.

In operation 860, the server transmits the detected AR information to the corresponding terminal. In an exemplary embodiment, the server may transmit the information about related objects as well as information about the corresponding object to the terminal. In an exemplary embodiment, the server may filter the AR information or the related object information based on context information and transmit only the filtered information to the terminal.

In operation 870, the terminal outputs the received AR information through the output unit 220 (see FIG. 2). In an exemplary embodiment, the terminal may output the information about related objects as well as the AR information of the recognized object. In other words, the terminal may provide both AR information about acquired object information and information about objects that are expected to be useful to the user. For example, the terminal may provide information about related objects, such as parent and child objects of the recognized object, or access paths to the related objects, while outputting AR information of the corresponding object. In an exemplary embodiment, the terminal may highlight related objects stored in the related object information storage 530 and display the highlighted, related objects on a display to distinguish them from other objects.

In an exemplary embodiment, the terminal may output information filtered based on context information.

Hereinafter, a method of recognizing an object that has been previously recognized, using related objects of the object will be described with reference to FIG. 10.

Recognition of an object has ever been previously performed by the terminal in FIG. 10. Referring to FIG. 5 and FIG. 10, in operation 910, a terminal acquires object information, and, in operation 920, transmits the acquired object information to a server. In operation 930, the server searches for the corresponding object in the related object information storage 530 to perform object recognition, instead of searching for the object in the full information storage 520. In operation 940, the server determines whether the object is recognized from the related object information storage.

In operation 950, if it is determined in operation 940 that the object is recognized from the related object information storage 530, the server detects AR information for the recognized object from the related object information storage 530.

In operation 960, if it is determined in operation 940 that the object is not recognized from the related object information storage 530, the server searches for AR information about the object from the full information storage 520. In operation 970, it is determined whether the object is recognized from the full information storage 520. If the object is recognized from the full information storage 520, the server detects AR information for the recognized object from the full information storage 520, in operation 980. However, if it is determined in operation 970 that the object is not recognized from the full information storage 520, the server determines that object recognition fails, and the process proceeds to operation 920.

In operation 990, if the object has been recognized via the related object information storage 530 or the full information storage 520, the server searches for related objects associated with the recognized object from the full information storage 520 and updates the related object information storage 530.

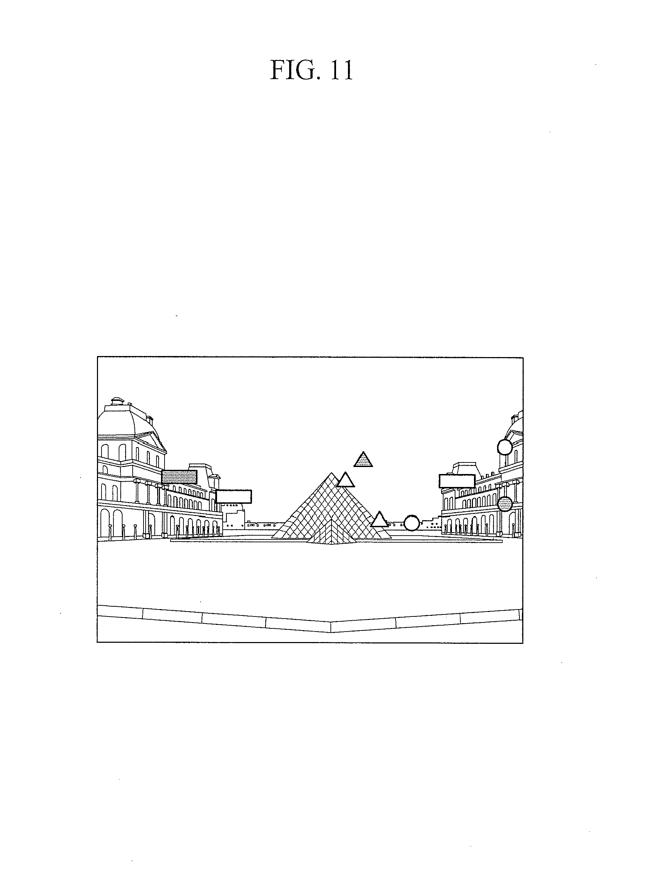

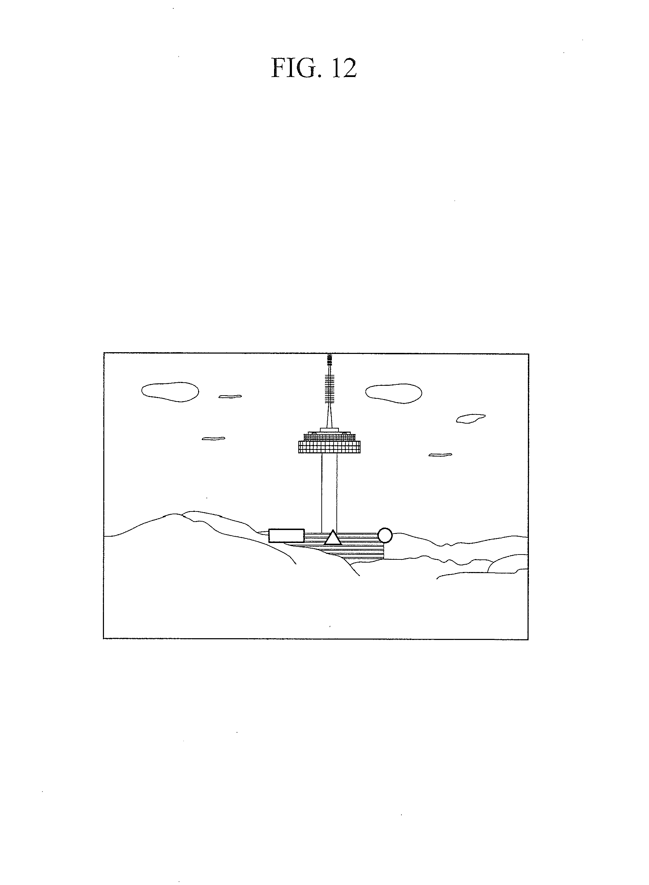

In operation 1000, the server transmits the determined AR information to the terminal. In an exemplary embodiment, the server may transmit related object information as well as the AR information of the object. In operation 1010, the terminal outputs the received AR information. In an exemplary embodiment, the terminal may provide information about objects that are anticipated to be useful to a user among the received related object information, as well as the AR information for the object information acquired in operation 910. For example, the terminal may provide information about related objects, such as the parent object and child object of the corresponding object, and access paths to the related objects, while outputting the AR information for the corresponding object. FIG. 11 and FIG. 12 illustrate examples in which AR is provided using a relationship between objects.

FIG. 11 depicts an illustrative AR provided using a relationship between objects according to an exemplary embodiment. FIG. 11 is a view for explaining a method for providing AR if objects provided by multiple AR service providers coexist.

FIG. 11 depicts objects provided by multiple AR service providers that use different image recognition methods coexisting in an acquired image. In this case, recognizing objects provided by an AR service provider that has provided a first recognized object can be more quickly performed than recognizing objects provided by other AR service providers. Accordingly, objects provided by the AR service provider that has provided the first recognized object, among a neighbor list associated with the first recognized object, may be highlighted, as indicated by the shading of the objects, and output.

FIG. 12 depicts an illustrative AR provided using a relationship between objects according to an exemplary embodiment. FIG. 12 is used to illustrate a method of providing AR using a marker corresponding to a markerless object.

Referring to FIG. 12, if a specific marker is recognized, information about the relationship between the marker and an object "N Seoul Tower" is acquired. For example, if a user uses a certain service based on a marker corresponding to a restaurant "The Place," the marker includes information that the marker is used in the restaurant "The Place" in the second floor of the "N Seoul Tower." The information is stored in a terminal and/or a server. Thereafter, if the user wants to receive a service based on the marker, he or she may use information stored in the terminal or capture an image of an object "N Seoul Tower," thereby receiving markers included in the object to use a service based on the corresponding marker. Parent object information of the marker used in the restaurant "The Place" includes N Seoul Tower, and child object information of the object "N Seoul Tower" includes information about the marker located in the restaurant "The Place."

Therefore, since recognition information about objects that are anticipated to be requested by a user is stored in advance, quick object recognition is possible and an object recognition rate may be improved. Also, AR information corresponding to a recognized object may be quickly detected and provided.

Moreover, since information about objects recognized once is used for recognition of other objects based on the relationship between objects, an object recognition rate can be further improved.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.
There is provided a method of providing Augmented Reality (AR) using the relationship between objects in a server that is accessible to at least one terminal through a wired/wireless communication network, including: recognizing a first object-of-interest from first object information received from the terminal; detecting identification information and AR information about related objects associated with the first object-of-interest, and storing the identification information and AR information about the related objects; recognizing, when receiving second object information from the terminal, a second object-of-interest using the identification information about the related objects; and detecting AR information corresponding to the second object-of-interest from the AR information about the related objects, and transmitting the detected AR information to the terminal.

## Claims

1. A method for providing Augmented Reality (AR), the method comprising:
obtaining first object information;
obtaining identification information and AR information about related objects associated with the first object information;
storing the identification information and AR information about the related objects;
recognizing, if second object information is received, an object-of-interest from the second object information using the stored identification information about the related objects; and
detecting AR information corresponding to the object-of-interest.

2. The method of claim 1,
wherein obtaining first object information includes recognizing an other object-of-interest from the first object information received from a terminal;
wherein obtaining identification information and AR information about related objects associated with the first object information includes detecting the identification information and the AR information about the related objects associated with the other object-of-interest;
wherein detecting AR information corresponding to the second object-of-interest includes detecting the AR information corresponding to the second object-of-interest from the stored AR information about the related objects; and
the method forther comprising:transmitting the detected AR information to the terminal.

3. The method of claim 1,
wherein obtaining first object information includes acquiring the first object information and transmitting the first object information to a server;
wherein obtaining identification information and AR information about related objects associated with the first object information includes receiving the identification information and the AR information about the related objects associated with the first object information from the server;
detecting AR information corresponding to the object-of-interest includes detecting the AR information corresponding to the object-of-interest recognized from the second object information; and
the method further comprising: outputting the detected AR information.

4. The method of any of claims 1 to 3, wherein the recognizing of the object-of-interest and/or the recognizing of the other object-of-interest comprises acquiring location information of the terminal and recognizing the respective object-of-interest based on to the acquired location information of the terminal.

5. The method of any of claims 1 to 4, wherein the recognizing of the object-of-interest and/or the recognizing of the other object-of-interest comprises, if a plurality of objects are included in the first object information received from the terminal, preferentially recognizing objects based on a specific criteria from among the plurality of objects.

6. The method of any of claims 1 to 5, wherein
the detecting of the identification information and the AR information about the related objects comprises classifying the identification information and AR information about the related objects associated with the object-of-interest and/or the other object-of-interest based on individual terminals, and
the storing of the identification information and the AR information about the related objects comprises storing the results of the classification.

7. The method of any of claims 1 to 6, wherein the related objects are at least one of an object located within a specific distance from a location of the object-of-interest and/or the other object-of-interest, a parent object of the object-of-interest and/or the other object-of-interest, a child object of the object-of-interest and/or the other object-of-interest, and combinations thereof.

8. The method of any of claims 1 to 7, further comprising:
detecting AR information about the other object-of-interest recognized from the first object information; and
transmitting the AR information about the other object-of-interest to the terminal,
and wherein, preferably, the transmitting of the AR information about the other object-of-interest comprises transmitting the identification information and the AR information about the related objects associated with the other object-of-interest to the terminal.

9. The method of any of claims 1 to 8, wherein the AR information is filtered using context information.

10. The method of any of claims 1 to 9, further comprising providing information about the related objects or access paths to the related objects, while outputting the AR information corresponding to the object-of-interest.

11. A server to provide Augmented Reality (AR) information, the server comprising:
a communication unit adapted to process signals received from and to be transmitted to a terminal;
a full information storage adapted to store identification information and AR information about an object;
a related object information storage adapted to store identification information and AR information about related objects associated with the object; and
a controller adapted to recognize a first object-of-interest from a first object information received from the terminal, to identify identification information and AR information about related objects associated with the first object-of-interest, to store the identification information and AR information about the related objects in the related object information storage, to recognize, if a second object information is received from the terminal, a second object-of-interest from the second object information using the stored identification information about the related objects, to detect an AR information corresponding to the second object-of-interest, and to transmit the AR information to the terminal.

12. A terminal to provide Augmented Reality (AR), the terminal comprising:
a communication unit adapted to process signals received from and to be transmitted to a server through a wired/wireless communication network;
an object information acquiring unit adapted to acquire information about an object included in an image of a real environment;
an output unit adapted to output information obtained by synthesizing the information about the object with AR information about the object;
a storage adapted to store AR information corresponding to an object received from the server, and to store identification information and AR information about related objects associated with the object; and
a controller adapted to transmit first object information received from the object information acquiring unit to the server, to receive identification information and AR information about related objects associated with the first object information from the server, to store the identification information and AR information about the related objects in the storage, to recognize, if second object information is received from the object information acquiring unit, an object-of-interest from the second object information using the identification information about the related objects stored in the storage, to detect AR information corresponding to the object-of-interest, and to output the AR information through the output unit.

13. The server of claim 11 or the terminal of claim 12, wherein the controller is adapted to acquire location information of the terminal, and to identify the first object-of-interest or the object-of-interest based on the location information of the terminal.

14. The server of claim 11 or 13 or the terminal of claim 12 or 13, wherein the controller is adapted to preferentially recognizing objects first from among the plurality of objects, if a plurality of objects are included in object information received from the terminal.

15. The server of any of claims 11, 13 and 14 or the terminal of any of claims 12 to 14, wherein the controller is adapted to classify the identification information and the AR information about the related objects associated with the first object-of-interest or the object-of-interest based on individual terminals, and to store the results of the classification.

16. The server of any of claims 11, 13 to 15 or the terminal of any of claims 12 to 15, wherein the related objects are at least one of an object located within a specific distance from a location of the first object-of-interest or the object-of-interest, a parent object of the first object-of-interest or the object-of-interest, a child object of the first object-of-interest or the object-of-interest, and combinations thereof.

17. The server of any of claims 11, 13 to 16 or the terminal of any of claims 12 to 16, wherein the controller is adapted to transmit the identification information and the AR information about the related objects associated with the first object-of-interest or the object-of-interest to the terminal.

18. The server of any of claims 11, 13 to 17 or the terminal of any of claims 12 to 17, wherein the AR information is filtered AR information filtered using context information, preferably stored in the storage.

19. The server of any of claims 11, 13 to 18 or the terminal of any of claims 12 to 18, wherein the controller is adapted to output information about the related objects or access paths to the related objects, while outputting the AR information corresponding to the first object-of-interest or the object-of-interest.
